**Europäisches Patentamt**

**European Patent Office**

**Office européen des brevets**

(19)

(11) Veröffentlichungsnummer : **0 316 294 B1**

(12)

# EUROPÄISCHE PATENTSCHRIFT

(45) Veröffentlichungstag der Patentschrift :
**08.04.92 Patentblatt 92/15**

(51) Int. Cl.$^5$ : **C10L 5/44,** F26B 3/32

(21) Anmeldenummer : **88890096.6**

(22) Anmeldetag : **18.04.88**

(54) **Verfahren zum Herstellen getrockneter Hackschnitzel.**

(30) Priorität : **11.11.87 AT 2977/87**

(43) Veröffentlichungstag der Anmeldung :
**17.05.89 Patentblatt 89/20**

(45) Bekanntmachung des Hinweises auf die
Patenterteilung :
**08.04.92 Patentblatt 92/15**

(84) Benannte Vertragsstaaten :
**AT BE CH DE FR GB IT LI NL SE**

(56) Entgegenhaltungen :
**WO-A-81/03029**
**DE-C- 497 322**
**DE-C- 601 956**

(73) Patentinhaber : **Berger, Josef**
**Bründlstrasse 81**
**A-4760 Raab (AT)**
Patentinhaber : **Kloimstein, Helmut, Mag.**
**Schillerstrasse 5**
**A-4020 Linz (AT)**

(72) Erfinder : **Berger, Josef**
**Bründlerstrasse 81**
**A-4760 Raab (AT)**

(74) Vertreter : **Hübscher, Heiner, Dipl.-Ing. et al**
**Spittelwiese 7**
**A-4020 Linz (AT)**

## Beschreibung

Die Erfindung betrifft ein Verfahren zum Herstellen getrockneter Hackschnitzel aus dem Holz von Laub- und/oder Nadelgehölzen, insbesondere aus Busch- und Abfallholz oder dem in Holzplantagen anfallenden Holz.

Hackschnitzel werden in zunehmendem Maße für Beheizungszwecke verwendet. Der Heizwert hängt wesentlich vom Trocknungsgrad der Hackschnitzel ab, wobei eine ausreichende Trocknung bis auf einen Feuchtigkeitsgehalt von 16 bis 20 Gew. % auch deshalb notwendig ist, um Versottungen der Kamine und eine untragbare Umweltbelastung durch die Rauchgase zu feuchter Hackschnitzel zu vermeiden.

Es ist bekannt, das Holz, inbesondere Abfallholz, an der Luft vozutrocknen, wofür große Abstellplätze benötigt werden, dann erst zu hacken und schließlich die Schnitzel in fremdbeheizten Trocknungsanlagen auf den gewünschten Feuchtigkeitsgrad zu trocknen. Vorgetrocknetes Holz läßt sich schlechter hacken als grünes Holz. Die notwendige Vortrocknung bedingt mehrere Arbeitsvorgänge zwischen der Holzbringung und dem Hackvorgang, wozu noch die notwendigen Lagerzeiten für die Trocknung und der Arbeits-, Zeit- und Energieaufwand für die Fertigtrocknung kommen. Bei starker Vortrocknung verringert sich zwar der Energieaufwand für die Fertigtrocknung, das Gut unterliegt aber bei unsachgemäßer oder ungünstiger Zwischenlagerung dem Schädlings- oder Pilzbefall und es kommt zu einem unerwünscht hohen Staub- und Feinkörperanteil im gehackten Gut, der fallweise sogar abgeschieden werden muß, um für Heizungsanlagen brauchbare Hackschnitzel zu erhalten. Für den abgeschiedenen Anteil ergeben sich Ablagerungsprobleme. Auf der Suche nach alternativen Anbaumöglichkeiten in der landwirtschaft gewinnen sogenannte Holzplantagen an Bedeutung, in denen schnellwüchsige Gehölze, wie Pappeln, Erlen, Weiden und verschiedene Hibiskusarten meist mehrstämmig buschartig gezogen werden, wobei manchmal die Möglichkeit besteht, einen Bodenstamm stehen zu lassen und nur die ausgetriebenen Stämme abzuernten, so daß ohne Neupflanzung mehrmalige Ernten in einem mehrjährigen Zyklus möglich sind. Wenn das in solchen Holzplantagen geerntete Holz zu Hackschnitzeln für Feuerungen verarbeitet werden soll, scheint eine wirtschaftliche, kostendekkende oder gewinnbringende Nutzung nur dann möglich zu sein, wenn das Problem der Trocknung der anfallenden Hackschnitzel ohne Fremdenergieeinsatz gelöst wird. Ein hoher Abfallholzanteil ergibt sich auch bei Wind- und Schneebruch, wobei hier wegen der sonstigen Gefahr des Schädlingsbefalles für eine rasche Aufarbeitung zu sorgen ist.

Es ist an und für sich bekannt, zum Trocknen bzw. Vortrocknen von biologisch durch Fermentation abbaubaren Massen die bei der Fermentation entstehende Wärme auszunützen. Aus den DE-C-497 322 und 601 956 ist es bekannt, Torf oder andere geringerwertige fossile Brennstoffe durch Auslösung und Aufrechterhaltung einer aeroben Gärung bzw. Fermentation zu trocknen. Zu diesem Zweck wird der Torf vorzerkleinert und schichtweise in einem luftdurchlässigen Mantelgehäuse angebracht und dann in einzelne Blöcke zerschnitten. Durch Hindurchleitung von luft und Impfung des Torfes mit die Gärung begünstigenden Organismen wird die Gärung in Gang gesetzt, wobei durch die entstehende Erwärmung in Vertikalschächten innerhalb des Gesamtstapels ein kaminartiger Zug erzeugt wird. Es können auch Mantelgehäuse mit regelbaren Belüftungsöffnungen und im Torstapel perforierte Entlüftungsrohre Verwendung finden. Bei der Variante nach der DE-C-601 956 wird eine Haufentrocknung vorgenommen. Dabei kann man am Boden des Haufens mehrere Wärmeherde aus geimpftem Torfmaterial, das mit humosen oder frischen organischen Stoffen angereichert wird, vorsehen, welche Wärmeherde mit feinem Material abgedeckt werden, wonach der gesamte zu trocknende Torfhaufen mit luftdurchtrittsöffnungen errichtet wird. Als Anreicherungsmaterial kann Torfmull, Streu oder auch frisch gemähtes Gras Verwendung finden, wobei man dem Torf auch organische Öle zusetzen kann. Die Wärme wird vorwiegend durch aerobe Gärung erzeugt und kann nach Absterben der Mikroorganismen durch Oxidation weitergeführt werden. Das Problem eines Pilzbefalles oder einer Fäulnisbildung tritt bei einem fossilen Brennstoff, wie Torf aufgrund der Materialeigenschaffen, des niedrigen pH-Wertes und des hohen Gerbsäureanteiles nicht auf. An eine Anwendung des Verfahrens zum Trocknen frischer organischer Substanzen, bei denen nicht nur eine Trocknung, sondern durch die Trocknung auch eine Konservierung gegen Schimmel- und Fäulnisbildung erzielt werden muß, ist nicht gedacht, das Verfahren wäre, so wie es für Torf beschrieben ist, für diese Zwecke auch unbrauchbar und würde bestenfalls zu einer Kompostierung führen.

Aus der WO-A-81/03029 ist es bekannt, Abfallmaterialien, nämlich städtischen Müll, Industriemüll und Klärschlamm zu mischen und aus diesem Gemisch Blöcke zu pressen, die wenigstens an ihrer Unterseite durchlaufende Kanäle eingeformt haben. Die Blöcke werden auf Paletten unter Freilassung von Luftdurchtrittsspalten gestapelt und unter natürlichem oder erzwungenem Luftdurchsatz durch die Kanäle und Blockzwischenräume einer aeroben Kompostierung unterworfen, wobei die aerobe Fermentierung schon zur Verhinderung einer Geruchsbelästigung der Umwelt beim Abbauvorgang der behandelnden Materialien notwendig ist. Durch die aerobe Fermentierung findet eine Teilkompostierung sowie durch die entstehende Wärme eine Teiltrocknung statt. Nach Beendigung des Fermentationsvorganges kann das Material - das zwangsweise einen geringen Heizwert aufweist - verbrannt und die Asche zur Kompostierung verwendet werden.

2

EP 0 316 294 B1

Aufgabe der Erfindung ist es, ein Verfahren anzugeben, nach dem bei geringem Arbeitsaufwand ohne wesemtliche Zwischenlagerungsprobleme und ohne bzw. nur geringen Einsatz von Fremdenergie ausreichend getrocknete Hackschnitzel mit hohem Heizwert bei nur geringen Materialverlusten hergestellt werden können.

Die gestellte Aufgabe wird prinzipiell durch die im kennzeichnenden Teil des Anspruches 1 angegebenen Verfahrensschritte gelöst.

Bisher war man der Ansicht, daß Hackschnitzel nur in getrocknetem Zustand in Bunkern lagerfähig seien, da man die Erfahrung gemacht hat, daß halbfeuchte oder nur vorgetrocknete Hackschnitzel bei der Bunkerlagerung zum Pilzbefall und zur Schimmelbildung neigen, so daß sie im Extremfall vermodern, aber selbst nur bei geringem Pilzbefall nur mehr bedingt oder überhaupt nicht mehr für Heizungszwecke eingesetzt und schon gar nicht als Brennmaterial an Fremdkunden verkauft werden können.

Die Erfindung beruht auf der überraschenden Erkenntnis, daß man durch Einsatz eines Grünmasseanteiles die für der Trocknung der Schnitzel erforderliche Wärme zumindest zum Großteil erzeugen kann. Durch die Unterbringung des Gutstockes in einem abgeschlossenen Raum wird erreicht, daß im wesentlichen nur der Grünmasseanteil der Fermentation unterliegt, wobei durch die Erwärmung aus dem Holz der Hackschnitzel die Feuchtigkeit ausgetrieben wird. Durch Wahl des richtigen Mischungsverhältnisses von Holz und Grünmasse sowie gegebenenfalls durch Fremdkühlung lassen sich Überhitzungen vermeiden.

Werden die Hackschnitzel nur aus dem Holz von laubgehölzen hergestellt, kann gemäß Anspruch 2 vorgegangen werden. Man kann aber auch Mischungen etwa aus grünen Laubholzhackschnitzeln und Hackschnitzeln aus grünem oder vorgetrocknetem Nadelholz herstellen und dann, wenn der Grünmasseanteil vom Laubgehölz her nicht ausreicht, weitere Grünmasse aus den angegebenen Materialien oder Mischungen daraus zusetzen. Es ist sogar möglich, Nadelholz allein mit einem entsprechenden Anteil fremder Grünmasse nach dem erfindungsgemäßen Verfahren zu trocknen. Der Grünmasseanteil richtet sich immer nach dem Gesamtfeuchtigkeitsgehalt und der von der Grünmasse aufgrund ihrer Beschaffenheit erzeugbaren Fermentationswärme sowie nach den für die Durchführung des Verfahrens zur Verfügung stehenden Räumen und deren Isolierung, wobei bei stärkerer möglicher Wärmeabfuhr vom Gutstock etwas mehr Grünmasse als bei herabgesetzter Wärmeabgabemöglichkeit einzusetzen ist. Man kann erreichen, daß die Schnitzel nach Beendigung des Fermentationsprozesses, bei dem es zu Erwärmungen bis auf etwa 80° C kommen kann, sowie nach darauffolgender Abkühlung in fertiggetrocknetem Zustand mit einem Feuchtigkeitsgehalt zwischen 16 und 20 Gew. % aus dem Trocknungsraum entnommen und verheizt oder verkauft werden können.

Bei Ausführung des Verfahrens gemäß Anspruch 3 wird auch in den Randschichten des Gutstockes eine ausreichende Fermentation der Grünmasse und eine ausreichende Durchwärmung des Holzanteiles zur Erzielung der Trocknung stattfinden.

Gemäß Anspruch 4 wird vorgegangen, wenn in großem Maßstab getrocknet wird und der Gutstock Höhen bis über 5 m erreicht, wobei mehrere Ableitschächte in Abständen von beispielsweise 2 m angebracht werden können. Es wird der Ableitwiderstand für die entstehenden Gase und den ausgetriebenen Wasserdampf verringert. Um eine ausreichende Verdichtung des gebildeten Gustockes durch Festtreten oder Niederwalzen, ähnlich wie bei der Grünfuttersilierung zu erzielen, können Schnitzelgrößen nach Anspruch 5 eingesetzt werden.

Vorzugsweise werden die Schnitzel entsprechend der Leistungsfähigkeit der Hackmaschine und der im jeweiligen Betrieb verfügbaren Arbeitszeit erzeugt, so daß der Gutstock nach und nach, aber ohne längere, z. B. mehr als einen Tag ausmachende Unterbrechungen aufgebaut wird. Um eine möglichst rasche Trocknung zu erzielen, kann man gemäß den Ansprüchen 6 oder 7 vorgehen, wobei die später zugeführten Schichten des Gutstockes durch die Wärme der Startlage rasch auf Fermentationstemperatur gebracht werden.

Bei größeren Anlagen kann man auch gemäß Anspruch 8 vorgehen, wobei sich ein Fremdenergieeinsatz erübrigt und sich der Vorteil ergibt, daß ein gegenseitiger Ausgleich möglich ist, wobei häufiger fertig getrocknete Hackschnitzelchargen zur Verfügung stehen.

Neben der schon erwähnten Isolierung des Fermentationsraumes kann man eine Vergleichmäßigung der Temperatur im Gutstock auch durch die im Anspruch 9 gegebenen Maßnahmen erreichen. Dabei kann man als Trägermedium sogar die zweckmäßig über einen Entfeuchter geführte Wasserdampf-Gasmischung verwenden und/oder man sieht mit einem flüssigen Medium betriebene Wärmetauscher zwischen dem Kern des Gutstockes, wo sie z. B. an einem Ableitschacht angebracht sein können, und dem Außenmantel des Gutstockes vor. Zur Vermeidung einer Verkohlung der Hackschnitzel bei zu hohem Grünantei oder relativ rascher Fermentation kann nach Anspruch 10 vorgegangen werden. Für die Kühlung können äußere Wärmetauscher eingesetzt werden, wobei man die überschüssige Wärme für die Warmwasserbereitung, andere Heizungszwecke oder gemäß Anspruch 8 einsetzen kann. In einem Gutstock ist der Trocknungsprozeß im wesentlichen abgeschlossen, wenn über eine vorgegebene Zeitspanne, die sich nach Größe und Wasserdampfableitmöglichkeit des Gutstockes richtet, die Trocknungstemperatur eingehalten wird. Nach dieser Periode kann man den Gutstock über äußere Wärmetauscher rasch abkühlen und dabei wieder die Speicherwärme ausnützen.

Ausführungsbeispiel:

Anfang Oktober wurden Birken geschlägert. Das anfallende Abfallholz, nämlich die Äste mit dem anhaftenden Reisig und dem an diesem noch vorhandenen Laubanteil, wurden sofort in einer Hackmaschine in Schnitzel mit Größtabmessungen zwischen 2 und 35 mm zerkleinert und von oben in einen über eine luftdicht schließende Panzertür begehbaren Aufnahmeraum eingebracht, der eine quadratische Grundform mit Seitenlängen von 5,6 m und eine Höhe von 4,30 m besaß und in der Mitte eine Einfüllöffnung von 1,60 m im Quadrat aufwies. Die anfallenden Schnitzel wurden in lagen über den Boden verteilt und beim Verteilen festgetreten. Nach Ende der Schlägerungsarbeiten und der entsprechend durchgeführten Hackarbeit war Anfang November im genannten Raum ein Gutstock mit etwa 120 m³ Schnitzel vorhanden. Der Grünanteil betrug etwa 10 Gew. % und der Gesamtfeuchtigkeitsgehalt etwa 60 Gew. % Die erwähnte Panzertür war geschlossen. In der Mitte des Gustockes war ein Abzugsschacht aus durchbohrten Brettern angebracht. Bei den relativ niedrigen Außentemperaturen kam es an der Einfüllöffnung und über dem Abzugsschacht zu einem wegen des sichtbaren Dunstschleiers gut erkennbaren Austritt non Wasserdampf. Das an der Decke des Raumes anfallende Kondenswasser wurde mit Hilfe von Folien gefangen und abgeleitet. Es konnte eine Erwärmung des Gutstockes bis auf etwa 80° C festgestellt werden. Diese Erwärmung war während der ersten beiden Wochen nach der Fertigstellung des Gutstockes am stärksten. 6 Wochen nach dem Einfüllen des letzten Gutes wurde die Panzertür geöffnet. Die über diese Tür entnehmbaren Hackschnitzel waren abgekühlt und wiesen einen Feuchtigkeitsgehalt zwischen 16 und 20 Gew. % auf, wobei an den Hackschnitzeln kein unangenehmer Geruch und auch keine Schimmelbildung oder ein sonstiger Pilzbefall festgestellt werden konnte. Die Hackschnitzel wiesen eine leicht gelbliche bis bräunliche Verfärbung auf, die auf die Fermentation zurückgeführt wird. Ein Teil der Hackschnitzel wurde problemlos verfeuert, ein anderer Teil als Schüttgut verladen und verkauft.

Nach dem gleichen Verfahren wurden in kleineren Räumen, die eine Wärmeisolierung an Boden und Wänden aufwiesen, aus grünem Erlenholz, das wieder einen Grünanteil von 10 % aufwies, erhaltene Hackschnitzel bzw. Grünhackschnitzel aus Buschholz, die in ihrer Beschaffenheit den aus dem in Holzplantagen anfallenden Holz gewonnenen Hackschnitzeln entsprechen, getrocknet, wobei auch hier der Trocknungsprozeß jeweils nach 6 Wochen abgeschlossen war. Versuchsweise wurden auch Mischungen aus gleichen Teilen Laubholz-Grünhackschnitzeln und Hackschnitzeln aus Nadel-Abfallholz, bei dem der Nadelanteil entfernt wurde, hergestellt, wobei zusätzlich zu dem anhaftenden Laub des Laubholzes Grünmasse von Blattpflanzen und Gräsern beigegeben wurde, um wieder einen Grünmasseanteil von 10 Gew. % zu erzielen. Auch hier wurde durch die Fermentation der Grünmasse eine ausreichende Wärmeentwicklung erzielt und der Trocknungsprozeß war nach 6 Wochen abgeschlossen.

In der Zeichnung sind als Ausführungsbeispiel zwei für die Durchführung des erfindungsgemäßen Verfahrens geeignete Anlagen veranschaulicht. Es zeigt

Fig. 1 eine Anlage schematisiert im Längsschnitt und

Fig. 2 eine Draufsicht auf eine ebenfalls im Schema gezeichnete Anlage.

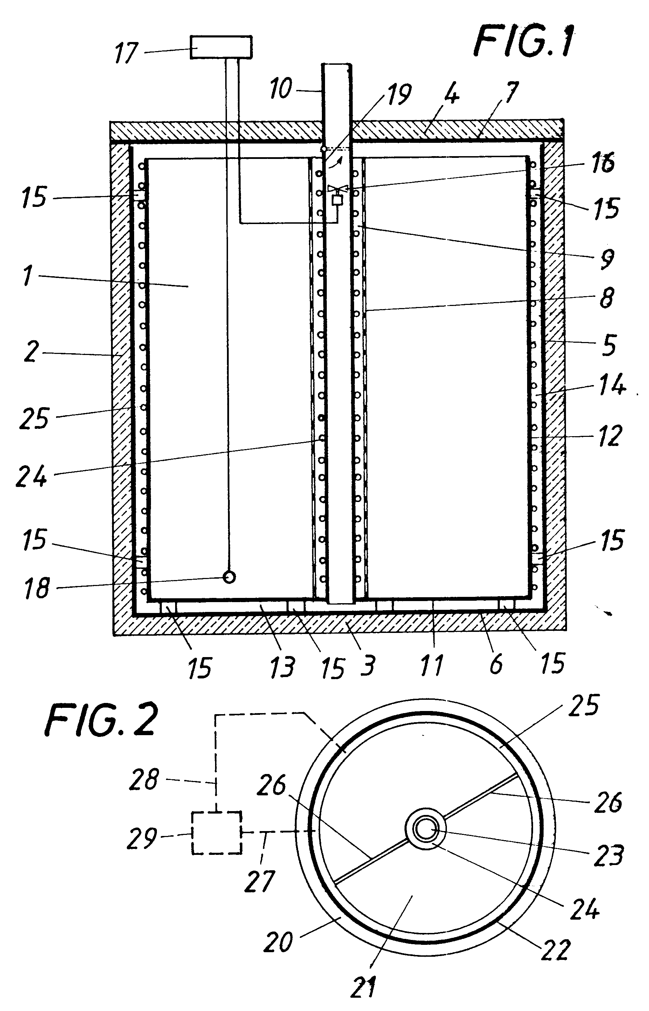

Nach Fig. 1 besitzt die dort dargestellte Anlage einen zylindrischen oder prismatischen Aufnahmeraum 1, der von Wänden 2, einem Boden 3 und einer Decke 4 umschlossen ist, die aus Beton, der gegebenenfalls eine korrosionsfeste Beschichtung aufweist oder aus Teilen einer Metall- oder Kunststoffkonstruktion bestehen können, wobei in der Decke 4 eine oder mehrere durch Deckel verschließbare, nicht dargestellte Einfüllöffnungen und in einer Wand 2 eine Entnahmetür vorgesehen sein können. Die Wände 2, der Boden 3 und die Decke 4 sind beim Ausführungsbeispiel innen mit einer wärmeisolierenden Auskleidung 5, 6, 7 ausgestattet. Bei eine Metall- oder Kunststoffkonstruktion kann die Wärmeisolierung auch an der Außenseite angebracht sein.

In der Mitte des Aufnahmeraumes 1 ist aus perforiertem Material, etwa einem Metallgitter 8 ein Abzugsschacht 9 gebildet, in dem ein Rohr 10 vorgesehen ist. Durch einen Zwischenboden 11 und einen Mantel 12 aus korrosionsfestem Material werden zwischen der Bodenisolierung 6 und der Unterseite des am Zwischenboden 11 aufliegenden Gutstockes sowie zwischen dem Außenmantel 12 des Gutstockes und der Wärmeisolierung 5 Durchzugsspalte 13, 14 gebildet. Beim Ausführungsbeispiel sind die Teile 11, 12 über Distanzhalter 15 abgestützt. Es wäre auch möglich, am Boden 3 sternförmig Abzugsrohre oder -schächte zum Schacht 9 zu verlegen und diese Rohre entlang der Wandungen 2 in Schächte übergehen zu lassen.

Im Abzugsrohr 10 ist ein Gebläse 16 angebracht, das von einer Steuereinheit 17 gesteuert wird. Diese Steuereinheit steht mit einem oder mehreren Temperaturfühlern 18 im Gutstock bzw. den Durchtrittsspalten 13, 14 oder den äquivalenten Schächten in Verbindung. Nach Einbringen des Gutstockes und Einsetzen der Fermentation kann eine Klappe 19 in die strichpunktiert dargestellte Lage verstellt und dadurch das Rohr 10 abgeschlossen werden. Durch Einschalten des Ventilators 16 wird das bei der Fermentation entstehende Gas-Wasserdampfgemisch unter dem Deckel 4, über die Spalte 13, 14, durch den Schacht 9 und durch das bis zur Klappe 19 reichende Rohrstück umgewälzt, wodurch ein Wärmeaustausch zwischen dem Kern und dem Mantel des Gutstockes im Raum 1 stattfindet. Während der Umwälzung kann das Gemisch über einen am unteren Ende des Rohres 10 angebrachten oder von in die Isolierung 6, 5 bereichsweise eingesetzten Kühlflächen gebildeten Feuchtigkeitsabscheider geführt und die abgeschiedene Feuchtigkeit nach außen abgeleitet werden. Zusätzlich ist ein mit einem flüssigen Medium betriebener Wärmetauscher zur Verbesserung des Wärmeüberganges zwischen dem Kern und dem Mantel des Gutstockes vorhanden, der durch Rohre 24, 25 angedeutet wurde und dessen Funktion im Zusammenhang mit Fig. 2 noch näher beschrieben werden wird. Durch Öffnen der Klappe 19, das ebenfalls von der Steuereinheit 17 gesteuert werden kann, kann das Wasserdampf-Gasgemisch nach außen geblasen werden.

Bei der Variante nach Fig. 2 ist ein zylindrischer Außenmantel 20 für einen Aufnahmeraum 21 vorhanden. Boden und Decke wurden nicht dargestellt. Mantel, Boden und Decke weisen eine Wärmeisolierung 22 auf. Der Aufnahmeraum kann von einer ähnlichen Konstruktion umgeben sein, wie sie bei Hochsilos für die Futteraufbereitung bekannt ist bzw. es ist sogar möglich, derartige bestehende Silos durch Wärmeisolierung und Einbauten als Aufnahmeraum zur Durchführung des erfindungsgemäßen Verfahrens verwendbar zu machen. Ein Mittelschacht 23 ist unter Freilassung von Durchtrittsspalten, die einen Gas- und Wasserdampfaustritt ermöglichen, von Rohren oder Radiatoren 24 eines Wärmetauschers umgeben. Entsprechende Wärmetauscherelemente 25 umschließen den Gutstock im Raum 21 von außen. Durch obere und untere Verbindungsrohre 26 kann das vorzugsweise aus einer Flüssigkeit bestehene Wärmetauschermedium, allenfalls unter gesteuerter Zwangsumwälzung einen Temperaturausgleich zwischen Kern und Außenmantel im Raum 21 herstellen. Wie strichliert angedeutet wurde, kann man den Wärmetauscher 24 bis 26 über Anschlußleitungen 27, 28 mit einem äußeren Kühl- oder Heizkreis 29 verbinden, wobei ein äußerer Heizkreis zur raschen Aufwärmung einer Startschicht des eingebrachten Gutes auf eine Fermentationswärme von etwa 40° eingesetzte werden kann und ein äußerer Kühlkreis 29 eingeschaltet wird, wenn die Stocktemperatur einen vorgewählten, zulässigen Temperaturbereich übersteigen würde. Im letzteren Fall kann die entzogene Wärme für die Warmwasserbereitung, für Heizzwecke oder zur Erwärmung des Gutstockes in anderen z. B. erst am Beginn der Fermentation stehenden Fermentationsräumen in parallel betriebenen Behältern eingesetzt werden. Der Wärmetauscher kann insbesondere im Bereich des Außenmantels 25 in mehrere Höhenabschnitte unterteilt sein, die gesteuert in und außer Betrieb gesetzt werden können, um in bestimmten Höhenzonen die Erwärmung des Mantels des Gutstockes regeln zu können.

## Patentansprüche

1. Verfahren zum Herstellen getrockneter Hackschnitzel aus dem Holz von Laub- und/oder Nadelgehölzen, insbesondere aus Busch- und Abfallholz oder dem in Holzplantagen anfallenden Holz, bei dem das Holz zu Schnitzeln gehackt und unter Erwärmung und Ableitung des Wasserdampfes getrocknet wird, dadurch gekennzeichnet, daß das Holz bereits in grünem Zustand bei einem Feuchtigkeitsgehalt bis zu 60 Gew. % zu den Schnitzeln gehackt, mit einer fermentationsfähigen, ebenfalls zerkleinerten Grünmasse, die aus der Rinde und dem Laub von Laubgehölzen, den Blättern von Blattpflanzen, Gras oder Mischungen davon besteht, vermischt wird, wobei ein Grünmasseanteil unter 15 Gew. % eingehalten wird, der Gesamtfeuchtigkeitsgehalt der Mischung aus den Hackschnitzeln und der Grünmasse bis über 70 Gew. % betragen kann, dabei aber der Grünmasseanteil entsprechend dem Feuchtigkeitsgehalt der Hackschnitzel eingestellt wird, und daß diese Mischung unter Pressung zu einem Gutstock in einem zumindest nach den Seiten und nach unten luftdicht abgeschlossenen Raum (1, 21) zur Fermentation gebracht und unter Ausnützung der entstehenden Fermentationswärme getrocknet wird, wobei ein Anstieg der Tempetratur über ca. 85° C verhindert wird und der Wasserdampf und entstehende Gase abgeleitet werden.

2. Verfahren nach Anspruch 1, dadurch gekennzeichnet, daß für die Herstellung von Hackschnitzeln aus dem Holz von Laubgehölzen die mit den Schnitzeln zerhackte Rinde und noch anghängendes Laub als Grünmasse verwendet werden und die Mischung aus Grünmasse und Hackschnitzeln unmittelbar nach dem Hackvorgang zur Fermentation gebracht wird.

3. Verfahren nach den Ansprüchen 1 und 2, dadurch gekennzeichnet, daß die Fermentation in einem Raum (1, 21) mit wärmeisoliertem Boden (6) wärmeisolierten Wänden (2, 20) durchgeführt wird.

4. Verfahren nach einem der Ansprüche 1 bis 3, dadurch gekennzeichnet, daß in dem aus den Schnitzeln gebildeten Gutstock gasdurchlässige, mit einem oberen Abzug (10) verbundene Ableitschächte (9, 23) für die entstehenden Gase und den ausgetriebenen Wasserdampf angebracht werden.

5. Verfahren nach einem der Ansprüche 1 bis 4 dadurch gekennzeichnet, daß das Holz auf Schnitzel verschiedener Größe mit Größtabmessungen zwischen 2 und 35 mm zerkleinert wird.

6. Verfahren nach einem der Ansprüche 1 bis 5, dadurch gekennzeichnet, daß bei der Bildung des Gutstockes im luftdicht abgeschlossenen Raum (1, 21) zumindest eine Startlage mit einem erhöhten Grünmasseanteil eingesetzt wird.

7. Verfahren nach einem der Ansprüche 1 bis 6, dadurch gekennzeichnet, daß zumindest die nur einen Bruchteil der Gesamtmasse des zu bildenden Gutstockes aufweisende Startlage durch Energiezufuhr von einer äußeren Wärmequelle (29) unmittelbar nach dem Einbringen auf eine über 40° C liegende Fermentationstemperatur erwärmt wird.

8. Verfahren nach einem der Ansprüche 1 bis 7, dadurch gekennzeichnet, daß zwei oder mehrere neben oder übereinander angeordnete Fermentationsräume verwendet und gegeneinander zeitlich versetzt mit der Hackschnitzel-Grünmassemischung beschickt werden, wobei überschüssige Fermentationswärme des bzu. der in voller Fermentation stehenden Gutstöcke ab- und dem bzw. den anderen Gutstöcken zur Erwärmung auf die Starttemperatur zugeführt wird.

9. Verfahren nach einem der Ansprüche 1 bis 8, dadurch gekennzeichnet, daß während der Trocknung ein Teil der entstehenden Fermentationswärme über ein Trägermedium aus dem Inneren des Gutstockes zum Mantelbereich des Gutstockes abgeleitet wird.

10. Verfahren nach einem der Ansprüche 1 bis 9, dadurch gekennzeichnet, daß die Gutstocktemperatur überwacht und ein Anstieg der Temperatur über ca. 85° C durch Kühlung verhindert wird.

## Claims

1. A method of producing dried coarse chips from the timber of deciduous and/or coniferous trees, more particularly from brushwood and waste timber or timber from timber plantations, in which method the wood is chopped into chips and is dried by heating and discharge of the water vapour, characterised in that the timber is chopped into the chips in the green state with a moisture content of up to 60% by weight, is mixed with a fermentable and likewise comminuted green substance consisting of the bark and the foliage of deciduous trees, the leaves of foliage plants, grass or mixtures thereof, the proportion of the green substance being kept below 15% by weight, while the total moisture content of the mixture consisting of the coarse chips and the green substance may be up to more than 70% by weight but the proportion of green substance is adjusted according to the moisture content of the coarse chips, and in that this mixture is brought to fermentation, with pressing to form a block, in a chamber (1, 21) which is hermetically sealed at least at the sides and at the bottom, and is dried using the resulting fermentation heat, the temperature being prevented from rising above about 45°C and the water vapour and gases evolved being discharged.

2. A method according to claim 1, characterised in that to produce coarse chips from the wood of deciduous trees the bark chopped up with the chips and foliage still attached are used as green substance and the mixture of green substance and coarse chips is brought to fermentation immediately after the chopping operation.

3. A method according to claims 1 and 2, characterised in that the fermentation is performed in a chamber (1, 21) having a thermally insulated base (6) and thermally insulated walls (2, 20).

4. A method according to any one of claims 1 to 3, characterised in that gas-permeable discharge shafts (9, 23) connected to a top outlet (10) are provided in the block formed from the coarse chips for the discharge of the evolved gases and expelled water vapour.

5. A method according to any one of claims 1 to 4, characterised in that the wood is comminuted to chips of different sizes with the maximum dimensions being between 2 and 35 mm.

6. A method according to any one of claims 1 to 5, characterised in that at least one starting layer having an increased proportion of green substance is used to form the block in the hermetically sealed chamber (1, 21).

7. A method according to any one of claims 1 to 6, characterised in that at least the starting layer, which has only a fraction of the total substance in the block to be formed, is heated to a fermentation temperature above 40°C immediately after introduction by the supply of energy from an external heat source (29).

8. A method according to any one of claims 1 to 7, characterised in that two or more fermentation chambers disposed side by side or one above the other are used and are fed with the mixture of coarse chips and green material in staggered relationship per unit of time, excess fermentation heat of the block or blocks in full fermentation being discharged and fed to the other block or blocks for heating to starting temperature.

9. A method according to any one of claims 1 to 8, characterised in that during the drying operation some of the fermentation heat evolved is discharged from the interior of the block to the outer surface area thereof by a carrier medium.

10. A method according to any one of claims 1 to 9, characterised in that the temperature of the block is monitored and any temperature rise above approximately 85°C is prevented by cooling.

## Revendications

1. Procédé de fabrication de particules hachées à partir de bois feuillu et/ou de bois résineux, en particulier de bois d'arbustes ou de déchets, ou encore de bois produit dans les plantations, procédé dans lequel le bois est haché en particules et séché par chauffage et évacuation de la vapeur d'eau, caractérisé en ce que le bois est déjà haché en particules alors qu'il est encore à l'état vert et possède encore une teneur en humidité pouvant atteindre jusqu'à 60 % en poids, puis mélangé avec une masse verte susceptible de fermentation, également fragmentée, qui est composée de l'écorce et du feuillage d'arbres feuillus, des feuilles de plantes à feuilles, d'herbe ou d'un mélange de ces divers produits, la proportion de la masse verte étant maintenue au-dessous de 15 % en poids, l'humidité totale du mélange composé des particules hachées et de la masse verte pouvant atteindre plus de 70 % en poids, mais la proportion de la masse verte étant réglée en fonction de la teneur en humidité des particules hachées, et en ce que ce mélange est mis à fermenter après avoir été comprimé en un amas de matière dans une chambre (1, 21) qui est fermée hermétiquement à l'air, au moins sur les côtés et vers le bas, et le bois est séché par utilisation de la chaleur de fermentation dégagée, cependant qu'on empêche la température de s'élever au-dessus d'environ 85°C et que la vapeur d'eau et les gaz dégagés sont évacués.

2. Procédé selon la revendication 1, caractérisé en ce que, pour la production de particules hachées à partir de bois feuillu, on utilise comme masse verte l'écorce hachée avec les particules et le feuillage encore attaché, et le mélange de masse verte et de particules hachées est mis à fermenter aussitôt après le hachage.

3. Procédé selon les revendications 1 et 2, caractérisé en ce que la fermentation est effectuée dans une chambre (1, 21) possédant un fond calorifugé (6) et des parois calorifugées (2, 20).

4. Procédé selon une des revencatications 1 à 3, caractérisé en ce qu'on dispose dans l'amas de matière composé des particules, des cheminées d'évacuation (9, 23) reliées à une sortie (10) placée en position haute, pour l'évacuation des gaz dégagés et de la vapeur d'eau expulsée.

5. Procédé selon une des revendications 1 à 4, caractérisé en ce que le bois est fragmenté en particules de différentes tailles, possédant des dimensions maximales comprises entre 2 et 35 mm.

6. Procédé selon une des revendications 1 à 5, caractérisé en ce que, lors de la formation de l'amas de matière dans la chambre (1, 21) fermée à joint étanche à l'air, on met en place au moins une couche d'amorçage possédant une proportion plus élevée de masse verte.

7. Procédé selon une des revendications 1 à 6, caractérisé en ce qu'au moins la couche d'amorçage, qui ne représente qu'une fraction de la masse totale de l'amas de matière à former, est chauffée, aussitôt après sa mise en place à une température de fermentation supérieure à 40°, par un apport d'énergie fourni par une source de chaleur extérieure (29).

8. Procédé selon une des revendications 1 à 7, caractérisé en ce qu'on utilise deux ou plus de deux chambres de fermentation juxtaposées ou superposées, qui sont chargées du mélange de particules hachées et de masse verte à des instants décalés dans le temps l'une par rapport à l'autre, la chaleur de fermentation excédentaire de l'amas ou des amas de matière qui est ou sont en pleine fermentation étant extraite et transmise à l'autre ou aux autres amas de matière pour le ou les porter à la température d'amorçage.

9. Procédé selon une des revendications 1 à 8, caractérisé en ce que, pendant le séchage, une partie de la chaleur de fermentation dégagée est transférée du centre de l'amas de matière à la région périphérique de cet amas de matière par l'intermédiaire d'un milieu caloporteur.

10. Procédé selon une des revendications 1 à 9, caractérisé en ce que la température de l'amas de matière est surveillée et au'on empêche la température de s'élever au-dessus d'environ 85°C grâce à un refroidissement.

FIG.1

FIG.2